# EUROPÄISCHE PATENTSCHRIFT

(11) **EP 2 639 502 B1**
(45) Veröffentlichungstag und Bekanntmachung des Hinweises auf die Patenterteilung: **19.08.2015**
(21) Anmeldenummer: 13150815.2
(22) Anmeldetag: 10.01.2013
(51) Int. Cl.: F21V 17/02, F21V 21/26, F21V 23/04, F21S 9/03

(54) **Leuchtenvorrichtung**
Light device
Dispositif d'éclairage

(30) Priorität: 13.03.2012 DE 202012100891 U
(43) Veröffentlichungstag der Anmeldung: 18.09.2013
(73) Patentinhaber: Steinel GmbH, 33442 Herzebrock (DE)
(72) Erfinder: Möller,Thomas, 32049 Herford (DE)
(74) Vertreter: Wagner, Kilian

(56) Entgegenhaltungen:
- WO-A1-92/18804
- DE-U1- 8 205 017
- DE-U1- 20 311 585
- GB-A- 2 458 933
- US-A1- 2006 187 656
- US-A1- 2010 307 075
- US-A1- 2012 026 726

## Beschreibung

Die Erfindung betrifft eine Leuchtenvorrichtung gemäß dem Oberbegriff des Anspruchs 1, insbesondere zur Außeninstallation.

Sensorgesteuerte Leuchtenvorrichtungen, insbesondere für den Einsatz im Außenbereich, sind seit langem bekannt. So zeigt beispielsweise die DE 10 2008 017 483 A1 eine zum Einsatz im Außenbereich ausgebildete, sensorgesteuerte Leuchtenvorrichtung mit einem Bewegungssensor, der eine menschliche Bewegung detektiert, woraufhin eine Steuerelektronik die als LED-Array ausgebildeten Leuchtmittel aktiviert. Die Sensormittel arbeiten im Außenbereich üblicherweise auf Basis von Infrarotsignalen, wobei in der Regel PIR-Sensoren (PIR = Passiv Infrarot) eingesetzt werden. Bei der bekannten Leuchtenvorrichtung ist es besonders vorteilhaft, das LED-Array um mehrere Achsen verschwenkbar anzuordnen, um den auszuleuchtenden Bereich mit großen Freiheitsgraden wählen zu können. Bei der bekannten Leuchtenvorrichtung ist nachteilig, dass diese einen Stromnetzanschluss benötigt, um die LEDs mit elektrischer Energie versorgen zu können.

Ferner sind Leuchtenvorrichtungen mit Photovoltaikzellen bekannt, die für die Energieversorgung der Leuchtmittel Sorge tragen. Bei derartigen Leuchtenvorrichtungen besteht im Regelfall das Problem, dass bei auf einen gewünschten, auszuleuchtenden Bereich gerichteten Leuchtmitteln die Photovoltaikzellen in einem ungünstigen Sonneneinstrahlwinkel angeordnet sind, was sich nachteilig auf die von diesen maximal zur Verfügung gestellte elektrische Energie zum Betreiben der Leuchtmittel auswirkt.

Aus der DE 82 05 017 ist eine Leuchtenvorrichtung bekannt, bei welcher ein Leuchtmittelträger und ein Energiemittelträger um eine gemeinsame Verschwenkachse verschwenkbar sind. Die Vorrichtung ist vergleichsweise klobig gestaltet.

Aus der US 2010/0307075 A1 ist es bekannt, eine Leuchtenvorrichtung V-förmig anzuordnen, umfassend einen Sockelabschnitt und einen Tragabschnitt zum gemeinsamen Tragen einer Photovoltaikanordnung sowie von Leuchtmitteln.

Zum weitern Stand der Technik werden die DE 203 11 585 U1, die GB 2 458 933 A, die US 2006/0187656 A1, die WO 92/18804 A1 sowie die US 2012/0026726 A1 genannt.

Ausgehend von dem vorgenannten Stand der Technik liegt der Erfindung die Aufgabe zugrunde, eine, insbesondere für den Außeneinsatz bestimmte, mindestens eine Solarzelle zur Stromerzeugung aufweisende Leuchtenvorrichtung anzugeben, mit welcher ein auszuleuchtender Bereich weitgehend unabhängig von der Sonneneinstrahlungssituation einstellbar ist.

Diese Aufgabe wird mit einer Leuchtenvorrichtung mit den Merkmalen des Anspruchs 1 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, das mindestens eine Leuchtmittel und die mindestens eine Photovoltaikzelle auf unterschiedlichen Trägern, nämlich einem Leuchtmittelträger und einem Energiemittelträger anzuordnen und jedem dieser Träger ein Schwenkgelenk zuzuordnen, das es ermöglicht, den jeweiligen Träger unabhängig von dem jeweils anderen Träger um jeweils eine Gelenkachse verschwenken zu können. Dabei nimmt die Erfindung bewusst den scheinbaren Nachteil in Kauf, mehr als ein Schwenkgelenk vorzusehen, welches bereits ein Relativverschwenken von Leuchtmittelträger und Energiemittelträger ermöglichen würde. Erst durch das erfindungsgemäße Vorsehen von je einem Schwenkgelenk pro Träger können größtmögliche Einstellfreiheitsgrade erreicht werden, da weder Leuchtmittelträger noch Energiemittelträger eine feststehende (unveränderliche) Position zu dem Halter und damit zu einem von diesen definierten Einbaufixpunkt einhalten müssen. Anders ausgedrückt können Leuchtmittelträger und Energiemittelträger unabhängig voneinander relativ zueinander sowie relativ zu dem, beispielsweise an einer Außenwand fixierbaren Halter verschwenkt werden, so dass völlig unabhängig voneinander eine Ausrichtung der mindestens einen Photovoltaikzelle zur Sonne und eine Ausrichtung der Leuchtmittel zu einem Leuchtbereich erfolgen können. Bevorzugt trägt der Halter mittelbar oder unmittelbar Fixiermittel zur Fixierung der Leuchtenvorrichtung, insbesondere im Außenbereich, beispielsweise an einer Hauswand, an einem Standfuß oder dergleichen. Ganz besonders bevorzugt ist es, wenn zusätzlich zu den Bewegungssensormitteln mindestens ein mit der Steuerelektronik zusammenwirkender Helligkeitssensor vorgesehen ist, der dafür Sorge trägt, dass erst eine_Detektion von Bewegungen ab Erreichen eines bestimmten Dämmerungsgrades bzw. Verdunklungsgrades zu einer Aktivierung des mindestens einen Leuchtmittels führt.

Die erfindungsgemäße Leuchtenvorrichtung eignet sich insbesondere als Wand-Haustürleuchte, vorzugsweise wie später noch erläutert werden wird, mit optionaler Hausnummernbeleuchtung. Auch kann die Leuchtenvorrichtung als Pollerleuchte, beispielsweise für den Garten, die Terrasse oder für Wege eingesetzt werden. Zudem ist es möglich, die Leuchtenvorrichtung als Strahler für helles gerichtetes Licht oder als Stufenleuchte auszubilden.

Insbesondere für eine Ausführung als Hausnummernleuchte oder Pollerleuchte ist es besonders zweckmäßig, wenn die Leuchtenvorrichtung zusätzlich zu den sensoraktivierbaren Leuchtmitteln mindestens ein, insbesondere energiesparsames, Leuchtmittel für eine (dauerhafte d.h. bewegungserkennungsunabhängige) Grundbeleuchtung oder dekorative Beleuchtung aufweist, wobei es noch weiter bevorzugt ist, wenn diesem mindestens einen weiteren Leuchtmittel ein Helligkeitssensor zugeordnet ist und die Steuerelektronik das zusätzliche Leuchtmittel erst ab Unterschreiten einer definierten, insbesondere einstellbaren, Helligkeit aktiviert.

Als besonders vorteilhaft hat es sich herausgestellt, wenn der Energiemittelträger lösbar an dem gemeinsamen Halter festgelegt bzw. festlegbar ist, um hierdurch weitere Freiheitsgrade bei der Montage der Leuchtenvorrichtung zu erhalten bzw. um die mindestens eine Photovoltaikzelle noch unabhängiger von dem Leuchtmittelträger zur Sonne ausrichten zu können. Dabei ist es besonders bevorzugt, wenn, wie später noch erläutert werden wird, zusätzlich zu dem gemeinsamen Halter ein, vorzugsweise unabhängig von dem gemeinsamen Halter montierbarer weiterer Halter als Teil der dann mehr mehrteiligen Leuchtenvorrichtung vorgesehen ist, an dem der Leuchtmittelträger, vorzugsweise verschwenkbar, noch weiter bevorzugt in einer im Vergleich zur Montageausrichtung am gemeinsamen Halter unterschiedlichen Montageausrichtung, insbesondere um 180°, vorzugsweise um eine senkrecht zur Schwenkachse verlaufende Achse gedreht, anordnenbar ist. Anders ausgedrückt ist in Weiterbildung der Erfindung ein modulartiger Aufbau der Leuchtenvorrichtung realisiert, bei welchem der Energiemittelträger unabhängig von dem gemeinsamen Halter als Alternative auch auf einem von dem gemeinsamen Halter separaten (eigenständigen) Halter, beispielsweise an einer Gebäudewand montierbar ist. Im Falle der lösbaren Anordnung des Energiemittelträgers an dem gemeinsamen Halter ist es besonders zweckmäßig, wenn eine Kabelverbindung zwischen dem Energiemittelträger und dem Halter und/oder dem Leuchtmittelträger zur Übertragung elektrischer Energie und/oder von Steuersignalen vorgesehen ist, wobei die Kabellänge des mindestens einen, vorzugsweise ausschließlich einen, Verbindungskabels vorzugsweise mehr als 20cm beträgt, noch weiter bevorzugt aus einem Wertebereich zwischen etwa 0,5m und 2m gewählt ist.

Als konstruktiv besonders vorteilhaft auch im Hinblick auf die damit erzielten ästhetischen Wirkungen hat es sich herausgestellt, wenn Leuchtmittelträger und Energiemittelträger relativ zu dem gemeinsamen Halter um eine gemeinsame Schwenkachse verschwenkbar anordnenbar und/oder am Halter angeordnet sind, wobei diese Schwenkachse den Halter vorzugsweise senkrecht durchsetzt und noch weiter bevorzugt in der bestimmungsgemäßen Endmontageposition vertikal verläuft. Anders ausgedrückt fluchten axial die beiden Gelenkachsen der Schwenkgelenke von Energiemittelträger und Leuchtmittelträger.

Um eine optimale Ausrichtung des Energiemittelträgers zur Sonne und gleichzeitig eine optimale Ausrichtung des mindestens einen Leuchtmittels zu einem Bodenbereich zu ermöglichen, ist in Weiterbildung der Erfindung mit Vorteil vorgesehen, dass sowohl der Energiemittelträger als auch der Leuchtmittelträger jeweils einen Sockelabschnitt und einen sich winklig dazu erstreckenden Tragabschnitt aufweisen, wobei der Tragabschnitt des Energiemittelträgers die mindestens eine Photovoltaikzelle und der Tragabschnitt des Leuchtmittelträgers das mindestens eine, vorzugsweise als LED ausgebildete, Leuchtmittel trägt. Eine derartige Ausbildung von Energiemittelträger und Leuchtmittelträger mit sich winklig zueinander erstreckendem Sockel- und Tragabschnitt ermöglicht zudem auf besonders elegante Weise, die Schwenkgelenke in Blickrichtung hinter den Tragabschnitten zu verstecken. Als besonders zweckmäßig hat es sich, insbesondere zur Erzielung überraschender ästhetischer Effekte herausgestellt, die jeweils, vorzugsweise einteilig ausgebildeten, Sockel- und Tragabschnitte über einen Radiusabschnitt miteinander zu verbinden, wobei es noch weiter bevorzugt ist, wenn Energiemittelträger und Leuchtmittelträger jeweils durch Umbiegen einer Metallplatte, insbesondere einer Aluminiumlegierungsplatte, hergestellt sind.

Die Anmelderin hat ermittelt, dass ein Winkel zwischen Sockelabschnitt und Tragabschnitt des Energiemittelträgers aus einem Winkelbereich zwischen etwa 40° und etwa 70°, vorzugsweise zwischen etwa 50° und etwa 60°, optimal ist in Bezug auf eine möglichst hohe Sonneneinstrahlung. Ganz besonders bevorzugt ist ein Wert von etwa 55°. Insbesondere aus ästhetischen Gründen und zur Erfassung eines Bereichs vor der Leuchtenvorrichtung hat es sich als vorteilhaft herausgestellt, wenn der Sockelabschnitt und der Tragabschnitt des Leuchtmittelträgers, zumindest näherungsweise, den gleichen Winkel einschließen wie der Sockelabschnitt und der Tragabschnitt des Energiemittelträgers. Um eine möglichst große Sonneneinstrahlung zu gewährleisten und um möglichst viele Leuchtmittel anordnen zu können, ist in Weiterbildung der Erfindung mit Vorteil vorgesehen, dass die Tragabschnitte von Energiemittelträger und Leuchtmittelträger flächig, d.h. plattenförmig ausgebildet sind und eine um ein Vielfaches geringere Dicken- als Flächenerstreckung aufweisen.

Optimal ist es, wenn bei einer am gemeinsamen Halter montierten Energiemittelträger und Leuchtmittelträger die Sockelabschnitte parallel zueinander ausgerichtet sind, wobei dann die, vorzugsweise gemeinsame, Schwenkachse senkrecht zu den Sockelabschnitten verläuft. Energiemittelträger und Leuchtmittelträger sind bei parallelen Sockelabschnitten derart ausgerichtet, dass sich die Tragabschnitte in einander entgegengesetzte Achsrichtungen, bezogen auf die, vorzugsweise gemeinsame, Schwenkachse erstrecken, wobei es besonders bevorzugt ist, wenn im montierten Zustand der Leuchtenvorrichtung, beispielsweise an einer Hauswand oder an einem im Boden verankerten Ständer der Tragabschnitt des Energiemittelträgers nach oben und der Tragabschnitt des Leuchtmittelträgers nach unten gerichtet ist, wobei es besonders zweckmäßig ist, wenn dabei die beiden Tragabschnitte in zumindest einer Relativposition die Außenkontur eines V's beschreiben.

Wie eingangs bereits erwähnt, ist ein modularer Aufbau der Leuchtenvorrichtung besonders bevorzugt, derart, dass der Energiemittelträger von dem gemeinsamen Halter abnehmbar und an einem weiteren Halter verschwenkbar festlegbar ist, wobei in Weiterbildung der Erfindung vorgesehen ist, dass der Energiemittelträger im Vergleich zur Montageposition an dem gemeinsamen Halter an dem weiteren Halter in einer um 180° gedrehten, vorzugsweise nach unten ausgerichteten, Position verschwenkbar anordnenbar ist.

Um die Ausrichtung des Energiemittelträgers, genauer von dessen mindestens einer Photovoltaikzelle zur Sonne zu erleichtern, sind in Weiterbildung der Erfindung Kompassmittel als Teil der Leuchtenvorrichtung vorgesehen, wobei diese ganz besonders bevorzugt am gemeinsamen Halter angeordnet sind. Besonders bevorzugt sind die Kompassmittel drehfest in Bezug auf den verschwenkbaren Energiemittelträger angeordnet, wobei der Energiemittelträger vorzugsweise eine Skala als Winkeleinstellhilfe aufweist. Als besonders vorteilhaft hat es sich herausgestellt, wenn die Kompassmittel im Bereich des Schwenkgelenks zum Verschwenken des Energiemittelträgers angeordnet sind, wobei vorzugsweise der Energiemittelträger, insbesondere dessen Sockelabschnitt, eine Aussparung aufweist, in der oder axial oberhalb derer sich die Kompassmittel befinden. Alternativ können die Kompassmittel auch mit dem Energiemittelträger schwenkbar und die Skala hierzu ortsfest, z.B. am Halter angeordnet werden.

Um die Funktionalität der Leuchtenvorrichtung weiter zu erhöhen, insbesondere um die Leuchtenvorrichtung bei Bedarf auch als Hausnummernbeleuchtung einsetzen zu können, ist in Weiterbildung der Erfindung mit Vorteil vorgesehen, dass an dem Leuchtmittelträger ein, vorzugsweise, zumindest abschnittsweise durchleuchtbares Schild, insbesondere ein Hausnummernschild, vorzugsweise lösbar festlegbar, insbesondere aufclipsbar ist, um das Schild von hinten mit Hilfe des mindestens einen Leuchtmittels durchstrahlen zu können. Vorzugsweise sind entsprechende Fixiermittel, insbesondere Aufclipsmittel, am Leuchtmittelträger und/oder am Schild vorgesehen.

Besonders bevorzugt ist es, wenn die, vorzugsweise als IR-Sensormittel ausgebildeten, Sensormittel drehfest an dem Leuchtmittelträger angeordnet und gemeinsam mit diesem verschwenkbar sind, da auf diese Weise unmittelbar Bewegungen in dem auszuleuchtenden Bereich detektierbar sind, ohne die Sensormittel separat ausrichten zu müssen.

Besonderes ideal ist es, wenn die Leuchtenvorrichtung Montagemittel, insbesondere am gemeinsamen Halter, aufweist, mit denen die Leuchtenvorrichtung derart ausrichtbar ist, dass Leuchtmittelträger und Energiemittelträger um eine gemeinsame, vertikale Schwenkachse verschwenkbar sind, wobei es besonders zweckmäßig ist, wenn sich bevorzugt vorgesehene Sockelabschnitte von Energiemittelträger und Leuchtmittelträger senkrecht zu dieser Vertikalen erstrecken.

Ganz besonders bevorzugt wird zur Speicherung der aus der Sonnenenergie erzeugten elektrischen Energie ein Akkumulator eingesetzt.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: eine Seitenansicht eines bevorzugten Ausführungsbeispiels einer erfindungsgemäßen Leuchtenvorrichtung, umfassend einen Leuchtmittelträger, einen Energiemittelträger sowie einen gemeinsamen Halter, relativ zu dem der Leuchtmittelträger und der Energiemittelträger unabhängig voneinander verschwenkbar sind,
- Fig. 2: eine Frontansicht der Leuchtenvorrichtung gemäß Fig. 1, und
- Fig. 3: eine Ansicht der Leuchtenvorrichtung von oben.

In den Figuren sind gleiche Elemente mit der gleichen Funktion mit den gleichen Bezugszeichen angegeben.

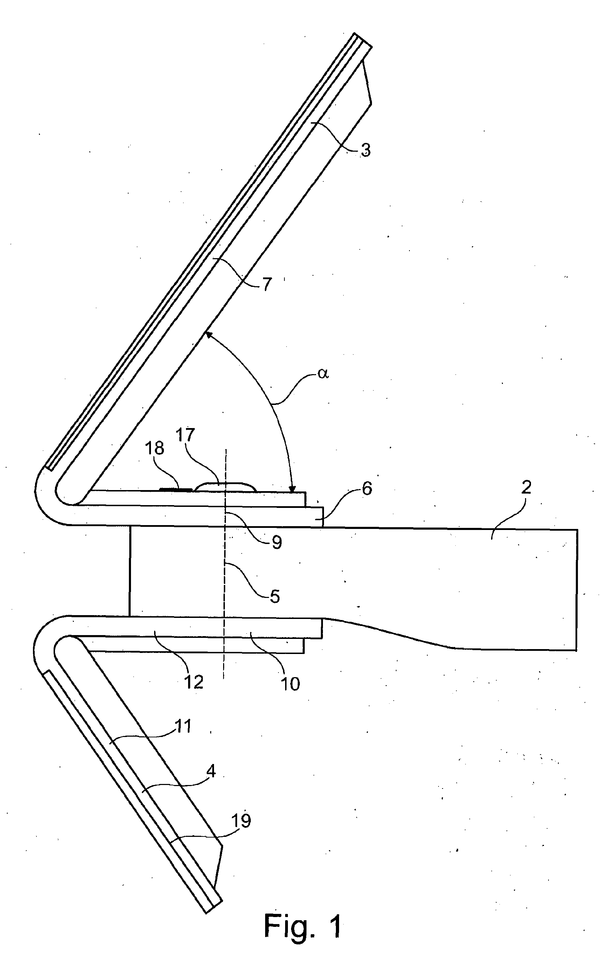

In Fig. 1 ist eine Leuchtenvorrichtung 1 für den Außenbereich gezeigt. Diese umfasst einen Halter 2, an welchem drehverschwenkbar festgelegt sind ein nach oben ausgerichteter Energiemittelträger 3 sowie ein in eine entgegengesetzte Richtung, d.h. nach unten ausgerichteter Leuchtmittelträger 4. Energiemittelträger 3 und Leuchtmittelträger 4 sind in eine gemeinsame Schwenkachse 5, die im montierten Zustand von einer Vertikalen gebildet wird, verschwenkbar und zwar unabhängig voneinander relativ zueinander sowie relativ zu dem, beispielsweise an einer Hauswand montierbaren Halter 2.

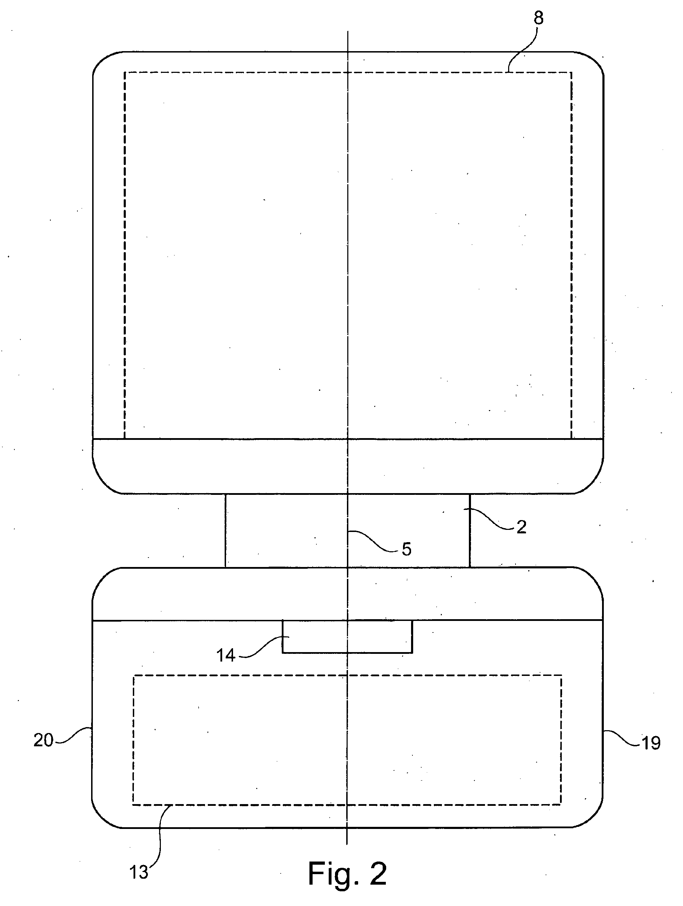

Wie sich aus Fig. 1 ergibt, umfasst der einteilige Energiemittelträger 3 einen (unteren) plattenförmigen Sockelabschnitt 6, der in einem vorderen Bereich über einen Radius übergeht in einen sich im montierten Zustand schräg nach oben erstreckenden Tragabschnitt 7, der ebenfalls flächig bzw. plattenförmig ausgebildet ist und mit dem Sockelabschnitt 6 einen Winkel α von in dem gezeigten Ausführungsbeispiel 55° einschließt. Der Tragabschnitt 7 hat dabei die Funktion die mindestens eine Photovoltaikzelle 8 zu tragen (vgl. Fig. 2), wohingegen den Sockelabschnitt 6 im Wesentlichen eine Trag- und Verschwenkfunktion zukommt.

Der Sockelabschnitt 6 ist über ein nicht näher dargestelltes (oberes) Schwenkgelenk 9 relativ zu dem Halter 2 verschwenkbar angeordnet, wobei das Schwenkgelenk 9 so ausgebildet ist, dass der Energiemittelträger, insbesondere durch Abziehen nach oben von dem Halter 2 abnehmbar ist, um an einem weiteren, nicht dargestellten Halter, der beispielsweise ausgebildet sein kann, wie der dargestellte Halter 2, verschwenkbar montiert zu werden und zwar in einer, vorzugsweise um 180° verdrehten Position, also analog wie der Leuchtmittelträger 4.

Der Leuchtmittelträger 4 umfasst ebenfalls einen eine Trag- und Verschwenkfunktion aufweisenden Sockelabschnitt 10 sowie einen mit diesem einen Winkel einschließenden Tragabschnitt 11, wobei der Winkel, den der Tragabschnitt 11 und der Sockelabschnitt 10 einschließt, in dem gezeigten Ausführungsbeispiel dem Winkel α entspricht, was bevorzugt ist.

Wie sich aus Fig. 1 ergibt, sind die Tragabschnitte 7, 11 von Energiemittelträger 3 und Leuchtmittelträger 4 in einander entgegengesetzte Achsrichtungen ausgerichtet, wobei die beiden Tragabschnitte 7, 11 in der gezeigten Verschwenkposition die Kontur eines V's beschreiben und einen Winkel von 110 ° einschließen.

Aus Fig.1 ergibt sich weiterhin, dass, im am Halter 2 montierten Zustand, die Sockelabschnitte 6, 10 parallel zueinander ausgerichtet sind, so dass die gemeinsame Schwenkachse 5 die beiden Sockelabschnitte senkrecht schneidet. Ein nicht näher dargestelltes (unteres) Schwenkgelenk 12 zum Verschwenken des Leuchtmittelträgers 4 befindet sich mit Axialabstand entlang der Schwenkachse 5 unterhalb des Schwenkgelenks 9 für den Energiemittelträger 3.

Wie sich weiterhin aus Fig. 1 ergibt, ist die Flächenerstreckung der beiden Sockelabschnitte 6, 10 gleich groß, wohingegen die Flächenerstreckung der Tragabschnitte 7, 11 unterschiedlich gewählt ist, um einen großflächigeren Energiemittelträger zu erhalten, der eine Vielzahl von Photovoltaikzellen 8 tragen kann.

Aus Fig. 2 ist ein Bereich 13 auf der Frontseite des Tragabschnitts 11 des Leuchtmittelträgers 4 gezeigt, in welchem nicht näher dargestellte Leuchtmittel, beispielsweise in Form eines LED-Arrays vorgesehen werden können. Bevorzugt befinden sich die Sensormittel 14 in einem hierzu benachbarten Bereich, wobei die Sensormittel 14 in dem gezeigten Ausführungsbeispiel als IR-Sensor zur Detektion von Bewegungen ausgebildet sind. Zusätzlich können in dem gezeigten Sensormittelbereich auch Sensormittel zur Helligkeitsdetektion vorgesehen werden. Die einzelnen Leuchtmittel sind über eine nicht dargestellte Steuerelektronik angebunden, die signalleitend mit den Sensormitteln 14 verbunden ist. Gleichzeitig übernimmt die Steuerelektronik vorzugsweise das Energiemanagement der von den Photovoltaikzellen erzeugten elektrischen Energie, die in einen nicht dargestellten, beispielsweise in den Halter 2 integrierten Energiespeicher (Akkumulator) zwischengespeichert werden kann.

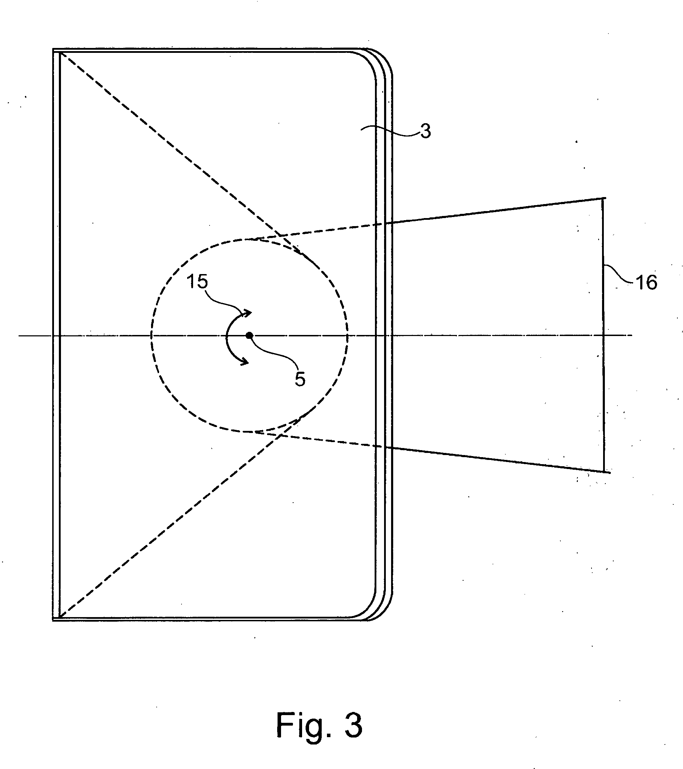

Aus der Draufsicht gemäß Fig. 3 sind die Schwenkrichtungen 15 zu erkennen, um die der Energiemittelträger 3 der Leuchtmittelträger 4 um die Schwenkachse 5 verschwenkbar sind.

Bevorzugt trägt der Halter 2 in einem hinteren Bereich 16 Fixiermittel zur Wandmontage oder dergleichen.

Aus Fig. 1 ergibt sich ein besonders vorteilhaftes Merkmal der gezeigten Leuchtenvorrichtung. Hiernach sind Kompassmittel 17 vorgesehen, die drehfest am Halter 2 festgelegt sind, wobei sich der Sockelabschnitt 6 des Energiemittelträgers um diese, beispielsweise als Magnetkompass ausgebildeten Kompassmittel 17 herum erstreckt. Benachbart zu den Kompassmitteln 17 befindet sich auf einer von dem Halter 2 abgewandten (Ober-) Seite des Sockelabschnittes 6 eine Skala 18, über die der Energiemittelträger 3 relativ zu dem Halter 2 mit Kompassmitteln 17, insbesondere nach Anweisung einer Montageanleitung ausrichtbar ist. Zum Ausrichten des Leuchtmittelträgers 4 bedarf es keiner Kompassmittel.

Bei Bedarf kann auch, in der in Fig. 2 gezeigten Vorderansicht des Leuchtmittelträgers 4 über dem Bereich 13 mit LEDs ein durchleuchtbares Schild fixiert werden, wobei dieses vorzugsweise lösbar durch Aufclipsen auf die Seitenwände 19, 20 des Tragabschnitts 11 fixierbar ist. Die Aufclipsmittel können hierzu beispielsweise die in Hochrichtung verlaufenden Seitenkanten umgreifen.

### Bezugzeichenliste

- 1: Leuchtenvorrichtung
- 2: Halter
- 3: Energiemittelträger
- 4: Leuchtmittelträger
- 5: Schwenkachse
- 6: Sockelabschnitt des Energiemittelträgers
- 7: Tragabschnitt des Energiemittelträgers
- 8: Photovoltaikzelle (n)
- 9: Schwenkgelenk
- 10: Sockelabschnitt des Leuchtmittelträgers
- 11: Tragabschnitt des Leuchtmittelträgers
- 12: Schwenkgelenk
- 13: Bereich für Leuchtmittel
- 14: Sensormittel
- 15: Schwenkrichtungen
- 16: Bereich
- 17: Kompassmittel
- 18: Skala
- 19: Seitenwand
- 20: Seitenwand

## Patentansprüche

1. Leuchtenvorrichtung mit einem mindestens ein Leuchtmittel aufweisenden Leuchtmittelträger (4) und mit einem mindestens eine Photovoltaikzelle (8) aufweisenden Energiemittelträger (3) zum Erzeugen von elektrischer Energie zum Betreiben des mindestens einen Leuchtmittels, mit einem Energiespeicher zum Speichen der elektrischen Energie und mit einem gemeinsamen Halter (2) zum Tragen des Leuchtmittelträgers (4) und des Energiemittelträgers (3), wobei der Leuchtmittelträger (4) und der Energiemittelträger (3) relativ zueinander sowie unabhängig voneinander um jeweils ein Schwenkgelenk (9, 12) relativ zu dem Halter (2) um eine gemeinsame Schwenkachse (5) verschwenkbar angeordnet sind, wobei sich die gemeinsame Schwenkachse (5) senkrecht zu den Flächenerstreckungen der Sockelabschnitte (6, 10) erstreckt, und der Energiemittelträger (3) einen Sockelabschnitt (6) und einen sich winklig zum Sockelabschnitt (6) erstreckenden Tragabschnitt (7) mit der mindestens einen Photovoltaikzelle (8) und der Leuchtmittelträger (4) einen Sockelabschnitt (10) und einen sich winklig zum Sockelabschnitt (10) erstreckenden Tragabschnitt (11) mit dem mindestens einen Leuchtmittel aufweist, und die Sockelabschnitte (6, 10) parallel zueinander angeordnet und/oder anordnenbar sind und sich die Tragabschnitte (7, 11) in einander entgegengesetzte Achsrichtungen erstrecken
**dadurch gekennzeichnet,**
**dass** eine dem Leuchtmittel zugeordnete Steuerelektronik zum Aktivieren des Leuchtmittels als Reaktion auf eine von signalleitend mit der Steuerelektronik verbundenen Sensormitteln (14) erfasste menschliche Bewegung vorgesehen ist, und **dass** der Sockelabschnitt (6) und der Tragabschnitt (7) des Energiemittelträgers (3) plattenförmig ausgebildet sind und dass der Winkel zwischen Sockelabschnitt (6) und Tragabschnitt (7) aus einem Winkelbereich zwischen 40° und 70° gewählt ist und dass der Sockelabschnitt (10) und der Tragabschnitt (11) des Leuchtmittelträgers (4) plattenförmig ausgebildet sind, und dass der Winkel zwischen Sockelabschnitt (10) und Tragabschnitt (11) aus einem Winkelbereich zwischen 40° und 70° gewählt ist. .

2. Leuchtenvorrichtung nach Anspruch 1,
**dadurch gekennzeichnet,**
**dass** der Energiemittelträger (3) lösbar an dem Halter (2) festgelegt ist.

3. Leuchtenvorrichtung nach einem der Ansprüche 1 oder 2,
**dadurch gekennzeichnet,**
**dass** sich der gemeinsame Halter (2) in einen Bereich zwischen die Sockelabschnitte (10, 6) von Leuchtmittelträger (4) und Energiemittelträger (3) erstreckt.

4. Leuchtenvorrichtung nach einem der vorhergehenden Ansprüche,
**dadurch gekennzeichnet,**
**dass** die Tragabschnitte (11, 7) von Leuchtmittelträger (4) und Energiemittelträger (3) in zumindest einer Schwenkposition zu dem Halter (2) einen Winkel aus einem Winkelbereich zwischen 80° und 140°, vorzugsweise zwischen 90° und 130°, noch weiter bevorzugt zwischen 100° und 120°, bevorzugt von 110° einschließen.

5. Leuchtenvorrichtung nach einem der vorhergehenden Ansprüche,
**dadurch gekennzeichnet,**
**dass** der Energiemittelträger (3) von dem Halter (2) abnehmbar ist und an einem weiteren Halter, insbesondere in einer um 180° gedrehten Position, verschwenkbar festlegbar ist.

6. Leuchtenvorrichtung nach einem der vorhergehenden Ansprüche,
**dadurch gekennzeichnet,**
**dass** dem Energiemittelträger (3) Kompassmittel (17) zum erleichterten Ausrichten des Energiemittelträgers (3) zugeordnet sind.

7. Leuchtenvorrichtung nach Anspruch 6,
**dadurch gekennzeichnet,**
**dass** die Kompassmittel (17) drehfest angeordnet sind und an dem Energiemittelträger (3) eine Skala (18) als Winkeleinstellhilfe angeordnet ist.

8. Leuchtenvorrichtung nach einem der vorhergehenden Ansprüche,
**dadurch gekennzeichnet,**
**dass** an dem Leuchtmittelträger (4) ein, zumindest abschnittsweise, durchleuchtbares Schild, insbesondere ein Hausnummernschild, vorzugsweise lösbar, festlegbar, insbesondere aufclipsbar ist.

9. Leuchtenvorrichtung nach einem der vorhergehenden Ansprüche,
**dadurch gekennzeichnet,**
**dass** die Sensormittel (14) drehfest an dem Leuchtmittelträger (4) angeordnet und gemeinsam mit diesem verschwenkbar sind.

10. Leuchtenvorrichtung nach einem der vorhergehenden Ansprüche, **gekennzeichnet,**
**durch** Montagemittel zur Montage der Leuchtenvorrichtung (1) derart, dass Leuchtmittelträger (4) und Energiemittelträger (3) um eine Vertikale verschwenkbar sind.

## Claims

1. A light device with a lighting means carrier (4) having at least one lighting means, and with an energy means carrier (3) having at least one photovoltaic cell (8) for generating electrical energy for operating the at least one lighting means, with an energy store for storing the electrical energy and with a shared holder (2) for carrying the lighting means carrier (4) and the energy means carrier (3), wherein the lighting means carrier (4) and the energy means carrier (3) are arranged pivotably relative to one another and independently of one another about respectively a pivot joint (9, 12) relative to the holder (2) about a shared pivot axis (5), wherein the shared pivot axis (5) extends perpendicularly to the surface extents of the base sections (6, 10), and the energy means carrier (3) has a base section (6) and a carrying section (7) extending at an angle to the base section (6) with the at least one photovoltaic cell (8) and the lighting means carrier (4) has a base section (10) and a carrying section (11) extending at an angle to the base section (10) with the at least one lighting means, and the base sections (6, 10) are arranged and/or are able to be arranged parallel to one another and the carrying sections (7, 11) extend in axial directions which are opposed to one another,
**characterized in that**
an electronic control system associated with the lighting means is provided for activating the lighting means as a reaction to a human movement detected by sensor means (14) connected in a signal-transmitting manner with the electronic control system, and that the base section (6) and the carrying section (7) of the energy means carrier (3) are constructed in a plate-shaped manner and that the angle between base section (6) and carrying section (7) is selected from an angle range of between 40° and 70° and that the base section (10) and the carrying section (11) of the lighting means carrier (4) are constructed in a plate-shaped manner, and that the angle between base section (10) and carrying section (11) is selected from an angle range of between 40° and 70°.

2. The light device according to Claim 1,
**characterized in that**
the energy means carrier (3) is fixed detachably on the holder (2).

3. The light device according to one of Claims 1 or 2,
**characterized in that**
the shared holder (2) extends into a region between the base sections (10, 6) of lighting means carrier (4) and energy means carrier (3).

4. The light device according to one of the preceding claims,
**characterized in that**
the carrying sections (11, 7) of lighting means carrier (4) and energy means carrier (3) in at least one pivoted position form with respect to the holder (2) an angle of an angle range between 80° and 140°, preferably between 90° and 130°, still further preferably between 100° and 120°, preferably of 110°.

5. The light device according to one of the preceding claims,
**characterized in that**
the energy means carrier (3) is removable from the holder (2) and is able to be fixed pivotably on a further holder, in particular in a position rotated through 180°.

6. The light device according to one of the preceding claims,
**characterized in that**
compass means (17) for the facilitated aligning of the energy means carrier (3) are associated with the energy means carrier (3).

7. The light device according to Claim 6,
**characterized in that**
the compass means (17) are arranged in a torque-proof manner and a scale (18) as angle adjustment aid is arranged on the energy means carrier (3).

8. The light device according to one of the preceding claims,
**characterized in that**
a plate, in particular a house number plate, which is translucent at least in sections, is able to be fixed, in particular clipped, preferably detachably, on the lighting means carrier (4).

9. The light device according to one of the preceding claims,
**characterized in that**
the sensor means (14) are arranged in a torque-proof manner on the lighting means carrier (4) and are pivotable together with the latter.

10. The light device according to one of the preceding claims,
**characterized**
**by** mounting means for mounting the light device (1) such that lighting means carrier (4) and energy means carrier (3) are pivotable about a vertical.

## Revendications

1. Dispositif d'éclairage avec un support de moyen d'éclairage (4) comportant au moins un moyen d'éclairage et avec un support de moyen d'énergie (3) comportant au moins une pile photovoltaïque (8) pour produire de l'énergie électrique permettant d'actionner l'au moins un moyen d'éclairage, avec un accumulateur d'énergie pour accumuler l'énergie électrique et avec un cadre support (2) commun pour maintenir le support de moyen d'éclairage (4) et le support de moyen d'énergie (3), le support de moyen d'éclairage (4) et le support de moyen d'énergie (3) étant disposés de façon à pouvoir pivoter l'un par rapport à l'autre de façon relative l'un par rapport à l'autre ainsi qu'indépendamment l'un par rapport à l'autre, autour respectivement d'une articulation pivotante (9, 12) par rapport au cadre support (2), autour d'un axe de pivotement (5) commun, l'axe de pivotement (5) commun s'étendant perpendiculairement aux prolongements de surface des sections de socle (6, 10) et le support de moyen d'énergie (3) comportant une section de socle (6) et une section portante (7) s'étendant en angle par rapport à la section de socle (6) avec l'au moins une pile photovoltaïque (8) et le support de moyen d'éclairage (4) comportant une section de socle (10) et une section portante (11) s'étendant en angle par rapport à la section de socle (10) avec l'au moins un moyen d'éclairage et les sections de socle (6, 10) pouvant être disposées et/ou agencées parallèlement l'une par rapport à l'autre et les sections portantes (7, 11) s'étendant dans des directions axiales opposées l'une par rapport à l'autre, **caractérisé en ce qu'**un système électronique de commande associé au moyen d'éclairage est prévu pour activer le moyen d'éclairage en réaction à un mouvement humain détecté par le moyen de détection (14) conducteur de signal relié au système électronique de commande et que la section de socle (6) et la section portante (7) du support de moyen d'énergie (3) sont réalisées en forme de plaque et que l'angle entre la section de socle (6) et la section portante (7) est sélectionné dans une plage angulaire comprise entre 40° et 70° et que la section de socle (10) et la section portante (11) du support de moyen d'éclairage (4) sont réalisées en forme de plaque et que l'angle entre la section de socle (10) et la section portante (11) est sélectionné à partir d'une plage angulaire comprise entre 40° et 70°.

2. Dispositif d'éclairage selon la revendication 1, **caractérisé en ce que** le support de moyen d'énergie (3) est fixé de façon amovible au cadre support (2).

3. Dispositif d'éclairage selon l'une quelconque des revendications 1 ou 2, **caractérisé en ce que** le cadre support (2) commun s'étend dans une zone située entre les sections de socle (10, 6) du support de moyen d'éclairage (4) et du support de moyen d'énergie (3).

4. Dispositif d'éclairage selon l'une quelconque des revendications précédentes, **caractérisé en ce que** les sections portantes (11, 7) du support de moyen d'éclairage (4) et du support de moyen d'énergie (3) incluent, au moins dans une position de pivotement par rapport au cadre support (2), un angle compris dans une plage angulaire entre 80° et 140°, de préférence entre 90° et 130°, de façon encore davantage préférée entre 100° et 120°, de façon préférée de 110°.

5. Dispositif d'éclairage selon l'une quelconque des revendications précédentes, **caractérisé en ce que** le support de moyen d'énergie (3) ne peut être retiré du cadre support (2) et peut être fixé à un cadre support supplémentaire de façon à pouvoir pivoter, notamment dans une position pivotée de 180°.

6. Dispositif d'éclairage selon l'une quelconque des revendications précédentes, **caractérisé en ce que** des moyens de boussole (17) sont associés au support de moyen d'énergie (3) pour l'orientation simplifiée du support de moyen d'énergie (3).

7. Dispositif d'éclairage selon la revendication 6, **caractérisé en ce que** les moyens de boussole (17) sont disposés de façon solidaire en rotation et qu'un cadran (18) prenant la forme d'un système auxiliaire de réglage d'angle est disposé au niveau du support de moyen d'énergie (3).

8. Dispositif d'éclairage selon l'une quelconque des revendications précédentes, **caractérisé en ce qu'**un panneau laissant au moins en partie passer la lumière, notamment un panneau de numéro de maison, peut être fixé, notamment clipsé, de préférence de façon amovible, au support de moyen d'éclairage (4).

9. Dispositif d'éclairage selon l'une quelconque des revendications précédentes, **caractérisé en ce que** les moyens de détection (14) sont disposés solidairement en rotation au support de moyen d'éclairage (4) et peuvent être pivotés conjointement avec lui.

10. Dispositif d'éclairage selon l'une quelconque des revendications précédentes, **caractérisé par** la présence de moyens de montage servant au montage du dispositif d'éclairage (1) de telle sorte que le support de moyen d'éclairage (4) et le support de moyen d'énergie (3) puissent être pivotés autour de la verticale.
